# EUROPEAN PATENT SPECIFICATION

(11) **EP 3 627 110 B1**
(45) Date of publication and mention of the grant of the patent: **25.10.2023**
(21) Application number: 18196059.2
(22) Date of filing: 21.09.2018
(51) Int. Cl.: G01C 21/36, G08G 1/0967

(54) **METHOD FOR PLANNING TRAJECTORY OF VEHICLE**
VERFAHREN ZUR PLANUNG DER TRAJEKTORIE EINES FAHRZEUGS
PROCÉDÉ DE PLANIFICATION DE LA TRAJECTOIRE D'UN VÉHICULE

(43) Date of publication of application: 25.03.2020
(73) Proprietor: Visteon Global Technologies, Inc., Van Buren Township, MI 48111-5711 (US)
(72) Inventor: PFEIFLE, Martin, 72297 Seewald (DE); TORSCHMIED, Axel, 75334 Staubenhardt (DE); SCHRECK, Christine, 69469 Weinheim (DE); OTTO, Matthias, 76327 Pfinztal-Söllingen (DE)
(74) Representative: MERH-IP Matias Erny Reichl Hoffmann Patentanwälte PartG mbB

(56) References cited:
- EP-A1- 0 899 542
- EP-A1- 3 048 023
- DE-A1-102010 042 089
- US-A1- 2016 069 702
- US-A1- 2017 307 395

## Description

### TECHNICAL FIELD

One or more embodiments described herein relate to a method for operating a navigation system for guiding a driver of an ego vehicle to a desired destination along a selected route path. In particular, the method may be implemented in a program which is executed by a computer. Furthermore, one or more embodiments described herein relate to a navigation system for guiding a driver of an ego vehicle to a desired destination along a selected route path. Particularly, the navigation system may be part of, or work in conjunction with, an advanced driver-assistance system (ADAS).

### BACKGROUND

In order to guide a driver of a vehicle to a specified goal along a selected route, most navigation systems use turn-by-turn navigation. Directions for following the selected route are continually presented to the driver in the form of audible and/or graphical instructions. Turn-by-turn navigation systems typically use an electronic voice to inform the user whether to turn left or right, continue straight, the street name, and a remaining distance to the turn. A typical instruction of a turn-by-run navigation system may include a command such as, "In three hundred meters, turn right into Elm Street." However, for some drivers such instructions may be difficult to follow since correctly judging the distance may not be an easy task for untrained humans. Moreover, the street name may not be useful information for a driver who is not familiar with the area.

In order to provide instructions to which a driver may react more intuitively, it has been suggested to include visual clues along the road such as traffic lights, points of interest, outstanding buildings, bridges, tunnels, or other landmarks in the instructions. Such an instruction may include a command such as, "After the church, turn left".

However, using static objects as references for guiding a driver requires that these objects are visible and easily recognizable at all times. Furthermore, when driving, the available time for spotting and recognizing a static reference point on the side of the road is limited. Other road participants around the ego vehicle have to be observed by the driver of the ego vehicle in order to maintain situational awareness and safely navigate in traffic.

United States Patent Application Publication No. US 2016/069702 A1 discloses a navigation device. A presentation of a preceding vehicle is made using an actual image or a graphic image of a vehicle that is the same as the actually seen vehicle, so that the user who drives the vehicle in traveling will understand that he/she only has to follow the preceding vehicle actually traveling ahead.

European Patent Application Publication No. EP 0899542 A1 describes a route guidance device for a vehicle comprising a preceding vehicle direction detecting means for detecting the direction of travel of a preceding vehicle located ahead of the vehicle, and guiding means for guiding the direction of travel of the vehicle on the basis of the detected direction of travel of the preceding vehicle.

German Patent Application Laid-Open No. DE 102010042089 A1 relates to a method including steps of determining a planned route of motor vehicle and receiving a planned route of another motor vehicle. The determined and received planned routes are compared. A request to follow another motor vehicle on matching portion of planned routes of motor vehicles is outputted to the driver of motor vehicle.

United States Patent Application Publication No. US 2017/307395 A1 discloses a navigation device for overlaying a travel route, in which the position of other vehicles located on the travel route is considered, on an image obtained from a front-view camera.

### BRIEF SUMMARY OF THE INVENTION

According to a first aspect the invention provides a method for operating a navigation system in accordance with claim 1. According to a second aspect the invention provides a program in accordance with claim 8. According to a third aspect the invention provides a navigation system in accordance with claim 10. Further aspects of the invention are set forth in the dependent claims, the drawings and the following description of embodiments.

One or more embodiments describe a method for operating a navigation system for guiding a driver of an ego vehicle to a desired destination along a selected route path. For example, the method aims at guiding a driver of the ego vehicle by providing an instruction to follow another vehicle. In the following, the term vehicle is understood to refer to any kind of suitable road participant including, for example, cars, motorcycles, trucks, buses, and bicycles. For example, an instruction, such as, "Follow the vehicle in front of you taking a left turn," may be provided to the driver of the ego vehicle. Thus, a more natural and more intuitive way of guiding a driver may be obtained.

According to an aspect, a method for operating a navigation system for guiding a driver of an ego vehicle to a desired destination along a selected route path comprises a step of obtaining information about vehicles in a region around the ego vehicle. For example, information about vehicles in front the ego vehicle may be acquired. This way it may be possible to identify a vehicle in front of the ego vehicle which may be followed in order to follow the route path.

Furthermore, according to another aspect, the behavior of vehicles around the ego vehicle may be predicted. For example, a preceding vehicle in front of the ego vehicle may have a right turn signal on and may be approaching an intersection. As part of the method of operating the navigation system, a prediction may occur based on detecting the right turn signal and upcoming intersection that the preceding vehicle is likely turning right at the intersection. If the route path to the desired destination also requires the right turn at the intersection, the navigation system may instruct, "Follow the vehicle in front of you taking the right turn." If the route path does not require the right turn, then the navigation system may i) instruct to not follow the vehicle in front, ii) remain silent, unless the navigation system detects that the ego vehicle is incorrectly following the vehicle in front making the right turn, or iii) issue another instruction, like to continue straight. As another example, the behavior of a vehicle currently behind or next to the ego vehicle may be predicted. From the prediction, the navigation system may instruct to allow the trailing vehicle to pass and/or fall behind the trailing vehicle. After the trailing vehicle has overtaken the ego vehicle, the navigation system may instruct to follow the vehicle now in front of the ego vehicle.

According to an aspect, the method may comprise a step of determining trajectories of the vehicles around the ego vehicle based on the obtained information. In order to identify a vehicle which may be followed, it may be necessary to determine the trajectory of that vehicle. This may be done a plurality of different ways. For the purpose of generating an instruction to follow another vehicle, it may be sufficient to determine only a relatively short trajectory of that vehicle. For example, it may be sufficient to determine the trajectory of another vehicle within a region of, for example, an intersection, a junction, a turn, a roundabout, an interchange, an entrance or an exit of a highway, and the like.

According to a further aspect, the method may comprise a step of comparing the trajectories of the vehicles around the ego vehicle with the selected route path. In other words, the determined trajectories of surrounding vehicles (i.e., vehicles around the ego vehicle) are analyzed in light of the planned trajectory of the ego vehicle. If there is a match between a determined trajectory of a surrounding vehicle and the planned trajectory of the ego vehicle, and the ego vehicle is behind the surrounding vehicle, the ego vehicle may follow the surrounding vehicle.

It may be sufficient to determine a match between the trajectories along a relatively short section of the route path, which allows the ego vehicle to follow a surrounding vehicle in order to continue along the selected route path. For example, in order to identify a suitable surrounding vehicle to follow, it may be sufficient to determine a match between the trajectories within a region of, for example, an intersection, a junction, a turn, a roundabout, an interchange, an entrance or an exit of a highway, and the like. In some cases it may be sufficient to identify a match of only a few tens of meters. The rate at which the trajectories of surrounding vehicles are analyzed may depend for example on a speed of the ego vehicle or on a density of nodes in the route path. For this purpose, the selected route path may be analyzed in order to detect nodes in the route path, at which a change of direction such as a turn will be required. Accordingly, threshold distances before or threshold radii around the detected nodes may be defined. Once the ego vehicle crosses such a threshold (or enters a radius), a suitable vehicle to follow needs to be identified by analyzing trajectories of surrounding vehicles. Once a suitable vehicle to follow has been identified, an instruction to follow the vehicle may be generated.

According to an aspect, the behavior of other road participants may be predicted based on an environmental model. The environmental model may comprise data related to the center lines and/or boundary lines of road lanes and data related to detected surrounding vehicles using sensors.

According to an aspect, matching between the trajectories of surrounding vehicles and the ego vehicle can be based on geometrical information only. For example, all (or at least some) former trajectories as well as their current position and heading of all (or at least some) surrounding vehicles around the ego vehicle may be known. For the ego vehicle the planned route path is also known. Sample points may then be calculated for the routes of the surrounding vehicles and the ego vehicle. Then the average distance between these sample points may be computed by finding the closest sample point on the planned route path to each sample point on a surrounding vehicle's trajectory. The distance may be computed as the Euclidian distance between these sample points. The average Euclidian distance may be used as a basic measure expressing the quality of the match between the planned route and a trajectory of a surrounding vehicle. Once a trajectory of a surrounding vehicle with a sufficient match is identified, the matched surrounding vehicle may be used for generating an instruction for guiding the driver of the ego vehicle.

According to an aspect, if it is determined that one of the surrounding vehicles either was driving, is currently driving, or will be driving along the selected route path, a step of generating and outputting an instruction to the driver of the ego vehicle to follow the one other vehicle may be carried out. This way the driver may be provided with an instruction which corresponds to the natural and intuitive way, a human passenger may provide an instruction to the driver in order to follow the route path. For example, the instruction may be generated as, "Turn left following the car in front of you," or, "Follow the car taking the exit on the right".

According to the invention, the step of obtaining information about vehicles around the ego vehicle comprises detecting a turn signal of at least one of the vehicles around the ego vehicle and further may comprise detecting at least one of a position, a velocity, a heading and/or a lane assignment of at least one of the surrounding vehicles. This may be by using sensor data generated by at least one sensor. The at least one sensor may be located on the ego vehicle. The at least one sensor may be in communication with the navigation system. The trajectories of the surrounding vehicles may be determined based on at least one of the position, the velocity, the heading, the turn signal and/or the lane assignment of at least one surrounding vehicles. As a sensor for creating the sensor data, at least one of a radar sensor, an infrared sensor, a camera, a stereo-camera, a LiDAR, and a laser sensor may be used. In certain embodiments, a combination of sensors may be used.

According to an aspect, the step of obtaining information about a surrounding vehicle may comprise detecting at least one of a color and/or a brand and/or a make (i.e. the model) and/or a turn signal and/or a type (e.g., car, truck, motorcycle, etc.) of the surrounding vehicle. In particular, one or more sensors may be used for obtaining information about surrounding vehicles. The generated instruction which is output to the driver comprises the turn signal and may further comprise at least one of the detected color, the brand, the make, and the type of the other vehicle to be followed. For example, an instruction, such as, "Follow the blue Mercedes sedan on the turning left," or, "Turn right following the red Ferrari indicating a right turn," or, "Follow the motorcycle straight through the intersection," may be generated. In case the instruction is visually presented to the driver, a realistic model of the vehicle to follow may be rendered. For this purpose, a data base of rendered models, for example three-dimensional graphical representations of vehicles, may be accessible. When a realistic graphical representation of the vehicle to follow is presented to the driver rather than a generic image of the other vehicle, the driver may recognize the vehicle to follow with less effort.

The process of detecting at least one of a color and/or a brand and/or a make (i.e. the model) and/or type of the vehicles in the vicinity of the ego vehicle may comprise acquiring an image and/or a LiDAR point cloud of the surrounding vehicles and processing the image data or point cloud data. The image processing may be executed for example by neural networks trained to detect what type of road participants are present, e.g., whether the road participant is an automobile, a bicycle, a lorry, a pedestrian, or a motorcycle. Further, the neural networks can be trained to detect the brand, the model the color, and/or the type.

According to an aspect, the step of obtaining information about surrounding vehicles may comprise a step of receiving data from the surrounding vehicles using a vehicle-to-vehicle (V2V) interface. V2V allows automobiles to exchange data with each other. Communication between vehicles may be implemented using a wireless connection. The information shared between vehicles may relate to, for example, position information and planned route information such that a match between routes between vehicles can be detected. When the ego vehicle receives, via V2V, route information and position information of vehicles in the vicinity of the ego vehicle, the instruction to follow a vehicle may be generated without the need to further detect the vehicle by means of sensors.

According to an aspect, an instruction may be output to the driver using acoustic signals and/or optical signals. In particular, a voice instruction may be output to the driver. Alternatively or additionally, a visual instruction may be output. The visual instruction may also incorporate information obtained about the vehicle to be followed. For example, an animated or still image of a vehicle resembling the vehicle to be followed may be displayed on a display comprised in the dashboard or in a head-up display.

According to an aspect, the method may further comprise a step of transmitting the obtained information about surrounding vehicles to a server. This may allow the server to determine trajectories of the surrounding vehicles. The process of determining trajectories of surrounding vehicles may involve a high computational effort. By transmitting the data comprising the information about surrounding vehicles to a server, this computationally costly processing may be carried out by the server, which may have much more processing power than a local processor of the ego vehicle. The amount of data which needs to be exchanged may be relatively small such that a time delay associated with the data transfer may be small, in particular compared to the time that may be saved by processing the trajectories using the higher processing power of the server.

According to an aspect, the method may further comprise a step of transmitting the selected route path to the server. The server may compare trajectories of the surrounding vehicles with the selected route path. The process of comparing the trajectory of the ego vehicle with the trajectories of surrounding vehicles may require a high computational effort. By transmitting the data comprising the information about surrounding vehicles and about the position and selected route path of the ego vehicle to a server, this computationally costly processing may be carried out by the server, which may have much more processing power than a local processor of the vehicle. The amount of data which needs to be exchanged may be relatively small such that a time delay associated with the data transfer may be small, in particular compared to the time that may be saved by processing using the higher processing power of the server.

According to an aspect, there is provided a program implementing a method for operating a navigation system for guiding a driver of an ego vehicle to a desired destination along a selected route path according to at least one aspect described herein. In particular, the program is executed by a computer. The program implementing the method may comprise a plurality of tasks which may be carried out by a plurality of processors. All or some of the processors may be provided locally at the ego vehicle and/or all or some of the processors may be provided centrally at a server or within a cloud network with which the ego vehicle may communicate. The program may be stored on a non-transitory computer-readable medium accessible by the server and/or the processor located in the ego vehicle.

According to an aspect, there is provided a navigation system for an ego vehicle, wherein the system comprises a routing unit for selecting a route path for the ego vehicle to a desired destination. For example, the route path may be selected by the driver from one or more possible routes to the desired destination according to one or more requirements or preferences which may be preset by the driver. The desired destination may be input by the driver using an input unit. In particular, the navigation system may be implemented as part of an advanced driver-assistance system (ADAS).

According to an aspect, the system may comprise a sensor unit for obtaining sensor data about vehicles in a region around the ego vehicle from a plurality of sensors. In particular, the plurality of sensors may include at least one of a camera, a stereo-camera, a radar, a LiDAR, an inertial measurement unit (IMU), and a receiver for receiving coordinates from a global navigation satellite system (GNSS).

According to an aspect, the system may comprise a processing unit for determining trajectories of the vehicles around the ego vehicle and for comparing the determined trajectories with the selected route path of the ego vehicle. In particular, the processing unit is configured for determining the trajectories of the surrounding vehicles based on the information received from a reception unit. The trajectories may be determined for example by analyzing the received information. For this purpose, the processing unit may execute one or more algorithms for detecting trajectories of surrounding vehicles. For example, the positions of surrounding vehicles detected over time may be tracked over time and compared to information such as lane markings and nodes between lanes comprised in a high-definition (HD) map. The function of comparing the detected trajectories with the selected route path may only be executed for a predetermined section of the route path. For example, the predetermined section may include about ten to one hundred meters of the route path, which is subsequently going to be travelled by the ego vehicle. In a first processing step, the processing unit may analyze the selected route path and detect nodes in the route path, at which a change of direction such as a turn will be required. Then the processing unit may define threshold distances before or threshold radii around the detected nodes. Once a threshold is crossed (or a radius is entered), a suitable vehicle to follow needs to be identified for generating an instruction.

According to an aspect, the system may comprise an instruction unit for generating instructions for following the route path, wherein if the trajectory of one surrounding vehicle matches with the selected route path, the instruction unit may be configured to generate an instruction to follow the one surrounding vehicle. The instruction unit may comprise a database storing visual and/or audio instruction templates. By selecting a suitable template and adding the relevant information, instructions can be generated very efficiently.

According to an aspect, the instruction unit is configured for generating the instructions based on the information received from the reception unit. The instruction unit may be implemented as a separate piece of hardware or by means of a software module executed by one or more processors. Functionally, the instruction unit receives information related to the outcome of a matching process between trajectories from the processing unit and generates the instruction which can be output to the driver of the ego vehicle by an output unit. Thus, the instruction unit is configured for converting the information received from the processing unit into an instruction which is provided in a data format suitable for the output unit.

According to an aspect, the system may comprise an output unit for outputting instructions to a driver of the ego vehicle. The output unit may be configured to output the instruction visually and/or acoustically to the driver. For this purpose, the output unit may comprise at least one of a display for displaying a graphical instruction, a speaker for outputting sound, and/or a head-up display (HUD). In particular, the output unit may be part of an ADAS or instrument cluster.

According to an aspect, the system may further comprise a reception unit for receiving information about other vehicles in a region around the ego vehicle from the other vehicles. In particular, the reception unit may receive data from the other vehicles using a vehicle-to-vehicle (V2V) interface. For example, when trajectory information is directly received from surrounding vehicles, a step of calculating trajectories of the surrounding vehicles, which may be computationally cumbersome, may be omitted. Additionally or alternatively, information related to the brand, color, type, and/or model of surrounding vehicles may be received via the V2V interface.

According to an aspect, the system may further comprise a server configured to communicate and exchange data with at least one of the routing unit, the sensor unit, the processing unit, the instruction unit, and the output unit. Data communication may be accomplished for example by means of a wireless network, such as a mobile data network. The server does not need to be a single centrally managed piece of hardware but may be implemented as a cloud computing network with the advantage of redundant components and simplified maintenance.

According to an aspect, the processing unit may be located at the server. Using a processing unit at the server may achieve the advantage of more easily providing more processing power than locally provided at the ego vehicle. On the other hand, tasks may also be divided between a processor at the server and a processor at the ego vehicle in order to decrease the time needed for data processing and to more efficiently use the available processing power.

### BRIEF DESCRIPTION OF THE DRAWINGS

Fig. 1 schematically illustrates a navigation system according to an embodiment.
Fig. 2 shows a process flow schematically illustrating a method according to an embodiment.
Fig. 3 shows a process flow schematically illustrating a method according to an embodiment.
Fig. 4 illustrates an example for route matching using prediction of environmental model.
Fig. 5 illustrates an example for route matching using V2V.
Fig. 6 illustrates an example for route matching based on geometrical relations between trajectories.

### DETAILED DESCRIPTION OF THE INVENTION

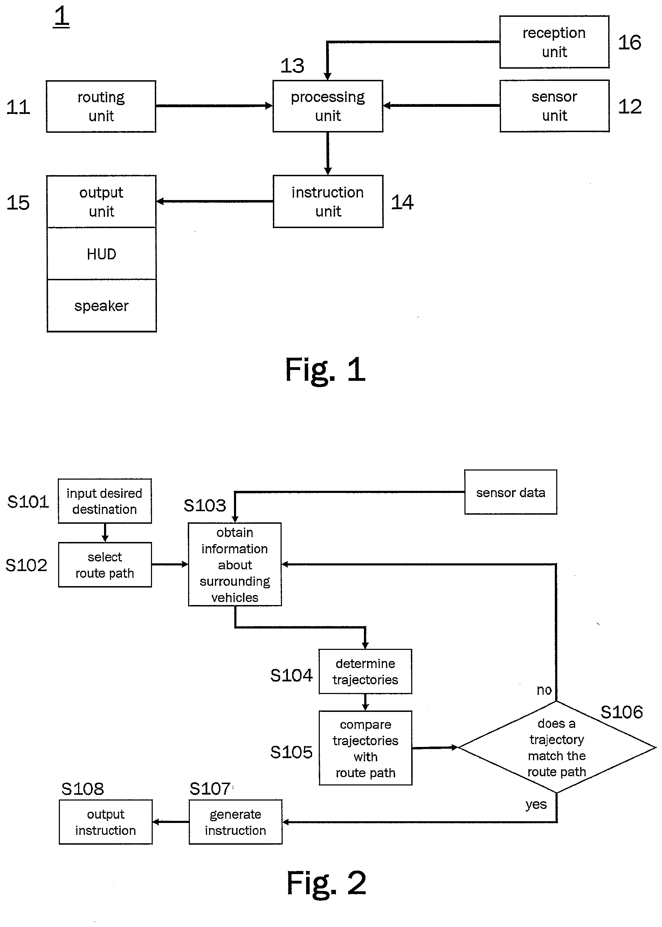

Fig. 1 shows a schematic illustration of a navigation system 1 for an ego vehicle according to an embodiment. The navigation system 1 may comprise a routing unit 11, a sensor unit 12, a processing unit 13, an instruction unit 14, an output unit 15, and a reception unit 16. The navigation system 1 may be implemented as part of an advanced driver-assistance system (ADAS) comprising an instrument cluster. In particular, the navigation system 1 may be used in motor vehicles such as an automobile, a motorcycle, or a truck. In some embodiments, the different units of the navigation system 1 may be implemented as software modules running on one or more electronic control units (ECUs). In particular, the sensor unit 12 and the routing unit 11 may run on different ECUs.

The routing unit 11 may enable the driver of the ego vehicle to select a route path for the ego vehicle to a desired destination. For this purpose the routing unit 11 may comprise an input unit for receiving input operations by the driver. By means of the input unit, the driver may input a desired destination. The routing unit 11 may then provide one or more possible route paths to the destination, from which the driver may select one route path to follow using the input unit.

The sensor unit 12 may comprise a plurality of sensors for obtaining sensor data about vehicles in a region around the ego vehicle. The sensor unit 12 typically includes at least a camera and a radar. Furthermore, the sensor unit 12 may also comprise a LiDAR. In particular, the camera, the radar, and the LiDAR of the sensor unit 12 may be configured to detect vehicles in a region in front of the ego vehicle. For example, the radar may be used to detect a distance of vehicles in front of the ego vehicle. Furthermore, the sensor unit 12 may comprise a receiver to receive location coordinates of the ego vehicle from a global navigation satellite system (GNSS). Furthermore, the sensor unit 12 may also comprise an inertial measurement unit (IMU) for detecting the location of the ego vehicle when no signal from the GNSS is available (for example in a tunnel).

The processing unit 13 may determine trajectories of the vehicles around the ego-vehicle based on the received information. Furthermore, the processing unit 13 may compare the determined trajectories with the selected route path.

The instruction unit 14 may be configured to generate instructions for following the route. If the trajectory of one surrounding vehicle matches with the selected route path of the ego vehicle, the instruction unit 14 may be configured to generate an instruction to follow the one surround vehicle. Furthermore, the instruction unit 14 may generate the instructions based on the information related to the brand, make, type, or color of the vehicle to follow.

The output unit 15 may comprise a head-up display for displaying visual information on a windscreen of the ego vehicle and an instrument cluster with one or more thin-film-transistor liquid-crystal displays (TFT-LCDs) for providing further visual information to the driver. The output unit 15 may comprise an audio system with at least one speaker for outputting audio to the driver. The output unit 15 may be used for outputting visual and acoustic instructions to the driver of the ego vehicle.

The reception unit 16 may be configured for receiving information about other vehicles in a region around the ego vehicle from the other vehicles. In particular, the reception unit 16 may receive data from the surrounding vehicles using a vehicle-to-vehicle (V2V) interface. This information may be used for determining the trajectories of the surrounding vehicles and/or for generating the instructions.

Embodiments of the system 1 may further comprise a server configured to communicate and exchange data with at least one of the routing unit 11, the sensor unit 12, the processing unit 13, the instruction unit 14, and the output unit 15. In particular, the processing unit 13 may be implemented at the server. For the data transfer between the ego vehicle and the server, the system 1 may be configured to communicate via a mobile data network.

Fig. 2 shows a process flow which schematically illustrates a method for operating a navigation system 1 for guiding a driver of an ego vehicle to a desired destination along a selected route path, according to one or more embodiments. The method may be carried out by a navigation system 1 as described above with reference to Fig. 1.

In a first process step S101 the driver of the ego vehicle may input a desired destination. This may be done for example by typing a destination using an input device or by using voice input. The navigation system 1 may search for the input destination in a database or on a map which may be stored locally or which may be obtained from a server via a data communication connection.

In a next step S102, a route path may be selected. For example, the driver may be presented with one or more possible route paths from the current location to the desired destination and may select a route path. For example, the driver may select a route path following the shortest distance or a fastest route path requiring the least amount of time. Further possible route paths may be selected according to user-defined requirements such as avoiding toll roads or avoiding border crossings.

After a route path has been selected in step S102, the driver may start his or her journey following instructions output by the navigation system 1. For example, the instructions may be output on a turn-by-turn basis, telling the driver to take a turn left or right or continue straight at intersections. Graphical indications and/or voice commands may be output by the navigation system in order to guide the driver. The timing for outputting the instructions may be triggered by comparing the current location of the ego vehicle with the route path. For example, after selecting a route path, the route path may be divided in to sections according to the necessary maneuvers between sections in order to follow the route path. Each maneuver may correspond to taking a turn or driving along a specified lane. A suitable distance before the maneuver, a threshold may be defined or a threshold radius may be defined around the location where a maneuver needs to be performed. The thresholds may be as a trigger for starting the process of generating an instruction.

In the following, the method may include a command for following another vehicle along the route path. These steps may be executed each time the ego vehicle approaches a node where an instruction needs to be provided to the driver in order to follow the route path.

In step S103, sensor data, generated by a sensor unit 12 of the navigation system 1, are processed in order to obtain information about vehicles in a region around the ego vehicle. For example, at least one of a position, a velocity, a heading, a turn signal, and/or a lane assignment of at least one vehicle around the ego vehicle may be detected. Additionally at least one of a color and/or a brand and/or a make and/or a turn signal and/or a type of the surrounding vehicle may be obtained. In particular, the information about surrounding vehicles may be obtained by processing sensor data received from at least one sensor. Alternatively or additionally, information about surrounding vehicles may be obtained by directly receiving data from the other vehicles using a vehicle-to-vehicle (V2V) interface. Information received via V2V may include information related to the trajectory of the surrounding vehicle, the brand, the make, the color, and the type of the surrounding vehicle.

In step S104, the obtained information is used to determine trajectories of the surrounding vehicles. The trajectories of the surrounding vehicles may be determined for example based on at least one of the position, the velocity, the heading, the turn signal and/or the lane assignment of at least one of the surrounding vehicles.

Then, in step S105, the trajectories of the other vehicles are compared with the selected route path. The step of comparing trajectories with the route path may include calculating a match of the determined trajectory with the ego vehicle's route path on a map.

Next, in step S106, it is determined whether or not there is a match between a trajectory of at least one surrounding vehicle and at least a portion of the selected route path of the ego vehicle. In other words, it is determined whether or not one of the other vehicles was driving, is currently driving, or will be driving along the selected route path. The match only needs to be within a predetermined radius of the current position of the ego vehicle, for example within a predefined distance from the ego vehicle or within a predefined radius of a node in the route path such as an intersection. Moreover, the match does not necessarily need to be exact. For example, if the vehicle to follow is driving along a lane parallel to the ego vehicle, it may be enough to follow that vehicle by staying on the current lane. Thus, the criterion of matching trajectories may be evaluated on a functional basis which leads to the desired result of driving along the selected route path rather than to exactly follow the movement of the surrounding vehicle.

If the outcome of the matching process is negative, the process returns to steps S103. Here, a negative outcome means that following the surrounding vehicle will not lead the ego vehicle along the selected route path.

If the outcome of the matching process in step S106 is positive, an instruction to follow the other vehicle whose trajectory matches the selected route match is generated in step S107. For example, the instruction may be generated comprising at least one of the detected color, the brand, the make, the type, and the turn signal of the other vehicle to be followed. Finally, in step S108, the generated instruction is output to the driver. For example, a visual instruction may be provided to the driver together with an audible command to follow the vehicle.

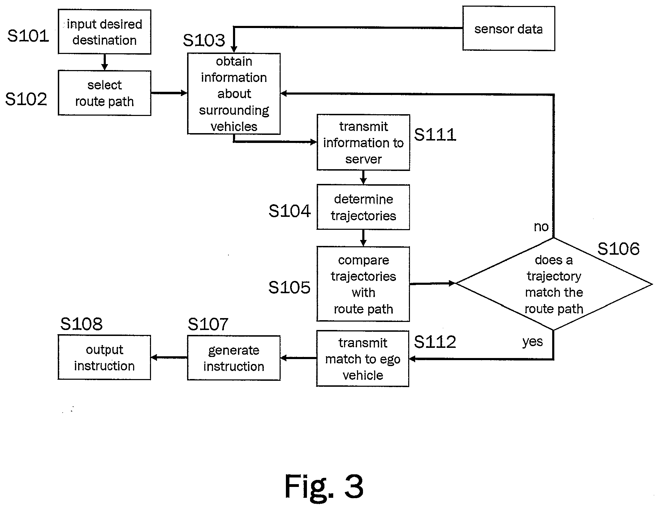

Fig. 3 illustrates a method for operating a navigation system for guiding a driver of an ego vehicle to a desired destination along a selected route path, according to one or more embodiments. The method may be carried out by a navigation system 1 as described above with reference to Fig. 1.

The method may include inputting a desired destination in step S101, selecting a route path in step S102, and obtaining information, via one or more sensors, about vehicles in a region around the ego vehicle in step S103. The obtained information on the surrounding vehicles may be transmitted to a server in step S111. Additionally, the selected route path of the ego vehicle may be transmitted to the server. The server may be remotely located from the ego vehicle. The ego vehicle may be in wireless communication with the server.

The method includes determining trajectories of the surrounding vehicles in step S104. That determination step, S104, may be performed by the server. Additionally, the method includes,

in step S105, comparing determined trajectories of the surrounding vehicles with the selected path of the ego vehicle. Step S105 may also be performed by the server. Based on the comparison, the method, in step S106, may include determining whether or not there is a match between a trajectory of a surrounding vehicle and the selected route path of the ego vehicle. Step S106 may also be performed by the server. In the event of a positive determination indicating a match, the method may include step S112. In step S112, the server may transmit to the ego vehicle that there is a match. Based on the transmission of the positive determination to the ego vehicle, the method includes generating an instruction, in step S107, and outputting the instruction to the driver of the ego vehicle, in step S108.

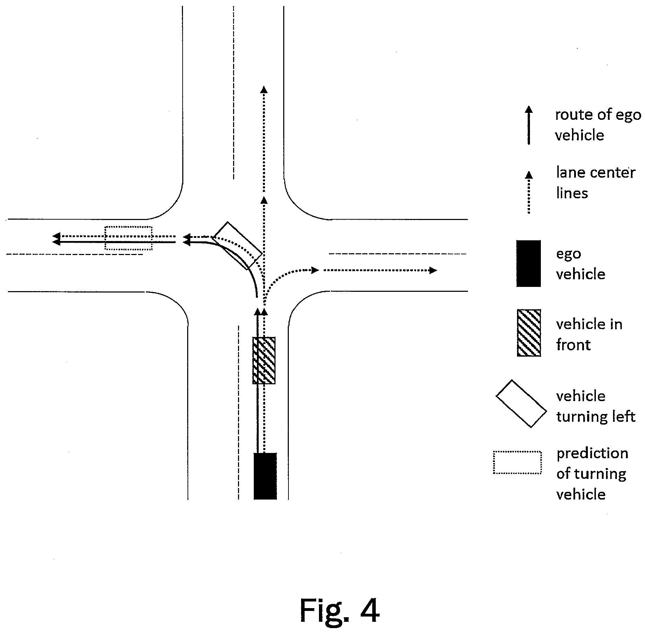

Figs. 4 to 6 illustrate examples for route matching methods which may be implemented in steps S104 to S106 of a process as described above with reference to Figs. 2 and 3.

Fig. 4 illustrates an example for route matching using prediction of an environmental model. The environmental model may provide data such as center of road lanes and junctions and surrounding vehicles detected using sensors of the ego vehicle. In Fig. 4, the lane center lines are indicated by the dotted arrows. At the exemplary four-way junction, three directions are possible for vehicles approaching the junction such as the ego vehicle (black rectangle) or the vehicle in front (rectangle with stripes): turn left, turn right, or continue straight. These three possibilities are indicated by the dotted arrows marking the center lines. The planned route of the ego vehicle is indicated by the solid arrow and comprises a left turn at the junction. The prediction of the environmental model gives a high probability that the vehicle illustrated by the white rectangle will also turn left and thus travel along the same trajectory within the boundaries of the junctions as the ego vehicle. Moreover, the sensors may provide data indicating that the turning vehicle is red. As a result of the positive trajectory matching, a voice command may be generated such as "Follow the red vehicle turning left on the next junction!"

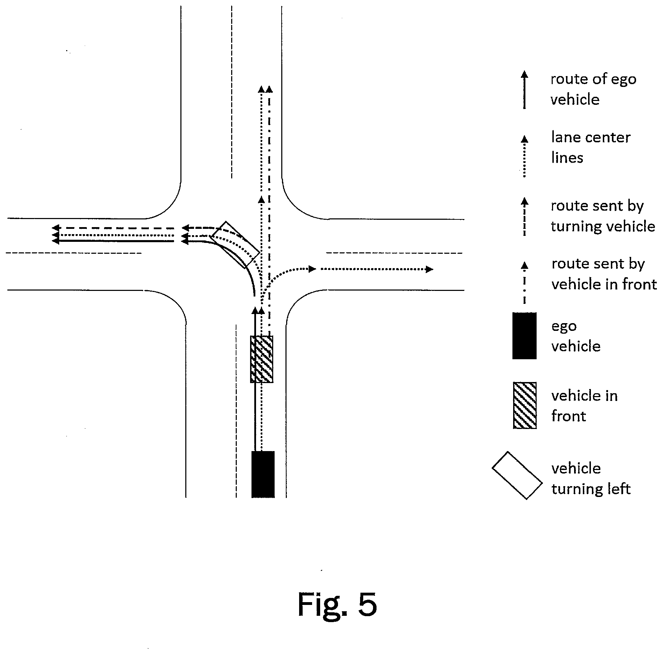

Fig. 5 illustrates an example for route matching using V2V. Similar to the situation depicted in Fig. 4, the ego vehicle approaches a junction where a left turn is necessary in order to follow the planned route (solid arrow). Two surrounding vehicles are present in front of the ego vehicle. A vehicle directly in front of the ego vehicle (dashed rectangle) may go straight ahead across the junction (dash-dotted arrow). Another vehicle (white rectangle) may take a left turn (dashed arrow). The ego vehicle may receive the routes of the surrounding vehicles by means of V2V-communication. Furthermore, the data transmitted by V2V may also include data about the surrounding vehicles such as their color. The trajectory matching process detects an overlap between the route sent by the vehicle turning left and the ego vehicle. As a result of the positive trajectory matching, a voice command may be generated such as "Follow the red vehicle turning left on the next junction!" Moreover, industry standards for V2V-communicationmay help the matching of trajectories of surrounding vehicles with the planned route. For example, the map database employed by different vehicles may differ such that direct matching of trajectories may not be possible. Thus, the matching process may require that the data received via V2V is analyzed in terms of road geometry, functional road classes of the roads, directional information, and speed information.

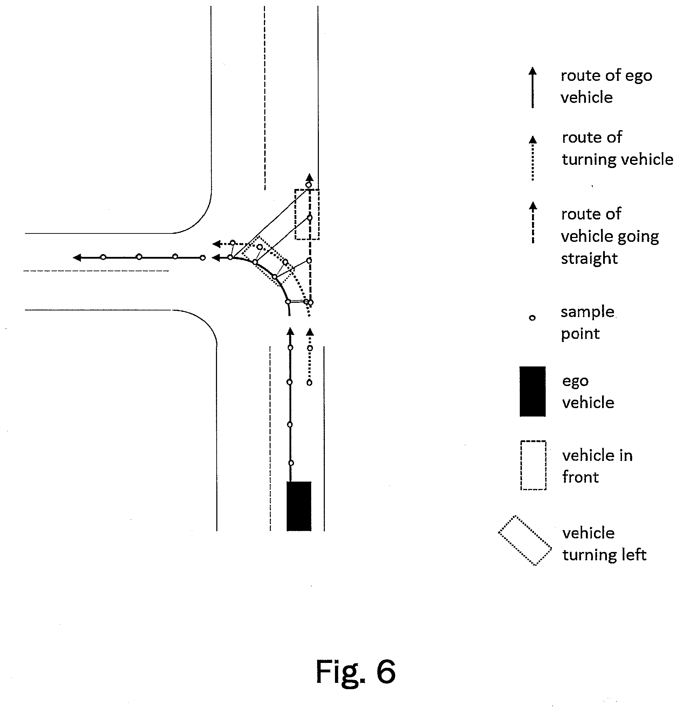

Fig. 6 illustrates an example for route matching based on geometrical relations between trajectories. A simple but powerful matching process may be based on geometrical information only. For example, the former trajectories as well as the current position and heading the surrounding vehicles (dotted rectangle and dashed rectangle) around the ego vehicle (black rectangle) may be known, for example from sensor data. At the junction depicted in Fig. 6, the planned route path of the ego vehicle makes a left turn. For the trajectories of both surrounding vehicles and the ego vehicle, sample points (small circles) may be calculated. Then the average distances indicated by the solid lines and dotted lines between the respective sample points may be computed by finding the closest sample point on the planned route path to each sample point on a surrounding vehicle's trajectory. The distance may be computed as the Euclidian distance between these sample points. The average Euclidian distance may be used as a basic measure expressing the quality of the match between the planned route and a trajectory of a surrounding vehicle. A smaller distance may indicate a better match. Once a trajectory of a surrounding vehicle with a sufficient match is identified, the matched surrounding vehicle may be used for generating an instruction for guiding the driver of the ego vehicle. In Fig. 6, the first sample points of the two trajectories of the surrounding vehicles have the same distance to the corresponding sample points of the ego vehicle's route path. However, after the turning point for the left turn, the distances to the sample points of the dashed trajectory are much higher than distances to the sample points of the dotted trajectory. Therefore, the process may return the result that the dotted trajectory matches the planned route path better than the dashed trajectory. For the purpose of creating an instruction, only vehicles which have trajectory with a small average distance to the planned route path of the ego vehicle may be selected. In the example of Fig. 6, an instruction to follow the vehicle of the dotted trajectory may be chosen.

The features described in herein can be relevant to one or more embodiments in any combination. The reference numerals in the claims have merely been introduced to facilitate reading of the claims. They are by no means meant to be limiting.

Throughout this specification various embodiments have been discussed. However, it should be understood that the invention is not limited to any one of these. It is therefore intended that the foregoing detailed description be regarded as illustrative rather than limiting, the limitation of the scope of protection being defined by the claims.

### REFERENCE NUMERALS

- 1: navigation system
- 11: routing unit
- 12: sensor unit
- 13: processing unit
- 14: instruction unit
- 15: output unit
- 16: reception unit

## Claims

1. Method for operating a navigation system for guiding a driver of an ego vehicle to a desired destination along a selected route path, the method comprising:
obtaining (S103) information about vehicles in a region around the ego vehicle;
determining (S104) trajectories of the vehicles around the ego vehicle based on the obtained information;
comparing (S105) the trajectories of the vehicles around the ego vehicle with the selected route path of the ego vehicle; and
if it is determined (S106) that one of the vehicles around the ego vehicle:
- was driving,
- is currently driving, or
- will be driving
along the selected route path:
generating (S107) and outputting (S108) an instruction to the driver of the ego vehicle to follow the one vehicle, **characterized in that**:
the step of obtaining information about vehicles around the ego vehicle comprises detecting a turn signal of at least one of the vehicles around the ego vehicle; and
the instruction is generated comprising the turn signal of the vehicle to be followed by the ego vehicle.

2. Method according to claim 1, wherein:
the step of obtaining information about other vehicles comprises: detecting at least one of a position, a velocity, a heading, and/or a lane assignment of at least one of the vehicles around the ego vehicle using sensor data generated by at least one sensor; and
the trajectories of the vehicles around the ego vehicle are determined based on at least one of the position, the velocity, the heading, and/or the lane assignment of at least one of the vehicles around the ego vehicle.

3. Method according to claim 1 or 2, wherein:
the step of obtaining information about vehicles around the ego vehicle comprises detecting at least one of a color and/or a brand and/or a make and/or a type of at least one of the vehicles around the ego vehicle; and
the instruction is generated comprising at least one of the detected color, the brand, the make, and the type of the vehicle to be followed by the ego vehicle.

4. Method according to at least one of the preceding claims, wherein the step of obtaining information about vehicles around the ego vehicle comprises a step of receiving data from the vehicles to the ego vehicle using a vehicle-to-vehicle (V2V) interface.

5. Method according to at least one of the preceding claims, wherein the instruction is output to the driver using acoustic signals and/or optical signals.

6. Method according to at least one of the preceding claims, further comprising a step of transmitting the obtained information about vehicles around the ego vehicle to a server, wherein
the step of determining trajectories of the vehicles around the ego vehicle is carried out by the server.

7. Method according to claim 6, further comprising a step of transmitting the selected route path to the server, wherein
the step of comparing the trajectories of the vehicles around the ego vehicle with the selected route path is carried out by the server.

8. Program comprising instructions, which when executed by a computer, cause the computer to carry out the method according to at least one of claims 1 to 7.

9. Program according to claim 8, wherein the program is stored on a non-transitory computer-readable medium accessible by the server.

10. Navigation system (1) for an ego vehicle, the system comprising:
a routing unit (11) for selecting a route path for the ego vehicle to a destination;
a sensor unit (12) for obtaining sensor data about vehicles in a region around the ego vehicle from a plurality of sensors;
a processing unit (13) for determining trajectories of the vehicles around the ego vehicle and for comparing the determined trajectories with the selected route path;
an instruction unit (14) for generating instructions for following the route path, wherein if the trajectory of one vehicle around the ego vehicle matches with the selected route path, the instruction unit is configured to generate an instruction to follow the one vehicle; and
an output unit (15) for outputting the instructions to a driver of the ego vehicle to follow the one vehicle, **characterized in that**
the sensor unit (12) is configured for detecting a turn signal of at least one of the vehicles around the ego vehicle; and
the output unit (15) is configured for generating the instruction comprising the turn signal of the vehicle to be followed by the ego vehicle.

11. System (1) according to claim 10, wherein the plurality of sensors includes at least one of a camera, a radar, a LiDAR, an inertial measurement unit (IMU), and a GNSS-receiver for receiving location coordinates of the ego vehicle from a global navigation satellite system (GNSS).

12. System (1) according to claim 10 or 11, wherein the output unit (15) comprises a head-up display.

13. System (1) according to at least one of claims 10 to 12, further comprising a reception unit (16) for receiving information about vehicles in a region around the ego vehicle from the other vehicles, wherein
the processing unit is configured for determining the trajectories based on the received information and/or
the instruction unit is configured for generating the instructions based on the received information.

14. System (1) according to at least one of claims 10 to 13, further comprising a server configured to communicate and exchange data with at least one of: the routing unit (11), the sensor unit (12), the processing unit (13), the instruction unit (14), and the output unit (15).

15. System (1) according to at least one of claims 10 to 14, wherein the processing unit (13) is located at the server.

## Patentansprüche

1. Verfahren zum Betreiben eines Navigationssystems zum Führen eines Fahrers eines Ego-Fahrzeugs zu einem gewünschten Ziel entlang eines ausgewählten Routenpfads, wobei das Verfahren Folgendes umfasst:
Erlangen (S103) von Informationen über Fahrzeuge in einer Region um das Ego-Fahrzeug;
Bestimmen (S104) der Trajektorien der Fahrzeuge um das Ego-Fahrzeug basierend auf den erlangten Informationen;
Vergleichen (S105) der Trajektorien der Fahrzeuge um das Ego-Fahrzeug mit dem ausgewählten Routenpfad des Ego-Fahrzeugs; und wenn bestimmt wird (S106), dass eines der Fahrzeuge um das Ego-Fahrzeug:
- entlang des ausgewählten Routenpfads
- fuhr,
- gerade fährt oder
fahren wird:
Erzeugen (S107) und Ausgeben (S108) einer Anweisung an den Fahrer des Ego-Fahrzeugs, dem einen Fahrzeug zu folgen, **dadurch gekennzeichnet, dass**:
der Schritt des Erlangens von Informationen über Fahrzeuge um das Ego-Fahrzeug Erfassen eines Blinkersignals von mindestens einem der Fahrzeuge um das Ego-Fahrzeug umfasst; und
die Anweisung so erzeugt wird, dass sie das Blinkersignal des durch das Ego-Fahrzeug zu folgenden Fahrzeugs umfasst.

2. Verfahren nach Anspruch 1, wobei:
der Schritt des Erlangens von Informationen über andere Fahrzeuge Folgendes umfasst: Erfassen von mindestens einem von einer Position, einer Geschwindigkeit, einer Richtung und/oder einer Spurzuordnung von mindestens einem der Fahrzeuge um das Ego-Fahrzeug unter Verwendung von Sensordaten, die von mindestens einem Sensor erzeugt werden; und
die Trajektorien der Fahrzeuge um das Ego-Fahrzeug basierend auf mindestens einem von der Position, der Geschwindigkeit, der Richtung und/oder der Spurzuordnung von mindestens einem der Fahrzeuge um das Ego-Fahrzeug bestimmt werden.

3. Verfahren nach Anspruch 1 oder 2, wobei:
der Schritt des Erlangens von Informationen über Fahrzeuge um das Ego-Fahrzeug Erfassen von mindestens einem von einer Farbe und/oder einer Marke und/oder einem Fabrikat und/oder einem Typ von mindestens einem der Fahrzeuge um das Ego-Fahrzeug umfasst; und
die Anweisung so erzeugt wird, dass sie mindestens eines von der erfassten Farbe, der Marke, dem Fabrikat und dem Typ des durch das Ego-Fahrzeug zu folgenden Fahrzeugs umfasst.

4. Verfahren nach mindestens einem der vorhergehenden Ansprüche, wobei der Schritt des Erlangens von Informationen über Fahrzeuge um das Ego-Fahrzeug einen Schritt des Empfangens von Daten von den Fahrzeugen an das Ego-Fahrzeug unter Verwendung einer Fahrzeug-zu-Fahrzeug-(V2V-)Schnittstelle umfasst.

5. Verfahren nach mindestens einem der vorhergehenden Ansprüche, wobei die Anweisung unter Verwendung akustischer Signale und/oder optischer Signale an den Fahrer ausgegeben wird.

6. Verfahren nach mindestens einem der vorhergehenden Ansprüche, ferner umfassend einen Schritt des Übertragens der erlangten Informationen über Fahrzeuge um das Ego-Fahrzeug an einen Server, wobei
der Schritt des Bestimmens von Trajektorien der Fahrzeuge um das Ego-Fahrzeug durch den Server ausgeführt wird.

7. Verfahren nach Anspruch 6, ferner umfassend einen Schritt des Übertragens des ausgewählten Routenpfads an den Server, wobei
der Schritt des Vergleichens der Trajektorien der Fahrzeuge um das Ego-Fahrzeug mit dem ausgewählten Routenpfad durch den Server ausgeführt wird.

8. Programm, das Anweisungen umfasst, die bei Ausführung durch einen Computer den Computer veranlassen, das Verfahren nach mindestens einem der Ansprüche 1 bis 7 auszuführen.

9. Programm nach Anspruch 8, wobei das Programm auf einem nicht transitorischen computerlesbaren Medium gespeichert ist, das für den Server zugänglich ist.

10. Navigationssystem (1) für ein Ego-Fahrzeug, wobei das System Folgendes umfasst:
eine Routing-Einheit (11) zum Auswählen eines Routenpfads für das Ego-Fahrzeug zu einem Ziel;
eine Sensoreinheit (12) zum Erlangen von Sensordaten über Fahrzeuge in einer Region um das Ego-Fahrzeug von einer Vielzahl von Sensoren;
eine Verarbeitungseinheit (13) zum Bestimmen von Trajektorien der Fahrzeuge um das Ego-Fahrzeug und zum Vergleichen der bestimmten Trajektorien mit dem ausgewählten Routenpfad;
eine Anweisungseinheit (14) zum Erzeugen von Anweisungen zum Folgen des Routenpfads, wobei, wenn die Trajektorie eines Fahrzeugs um das Ego-Fahrzeug mit dem ausgewählten Routenpfad übereinstimmt, die Anweisungseinheit dazu konfiguriert ist, eine Anweisung zu erzeugen, dem einen Fahrzeug zu folgen; und
eine Ausgabeeinheit (15) zum Ausgeben der Anweisungen an einen Fahrer des Ego-Fahrzeugs, dem einen Fahrzeug zu folgen, **dadurch gekennzeichnet, dass**
die Sensoreinheit (12) zum Erfassen eines Blinkersignals von mindestens einem der Fahrzeuge um das Ego-Fahrzeug konfiguriert ist; und
die Ausgabeeinheit (15) zum Erzeugen der Anweisung konfiguriert ist, die das Blinkersignal des durch das Ego-Fahrzeug zu folgenden Fahrzeugs umfasst.

11. System (1) nach Anspruch 10, wobei die Vielzahl von Sensoren mindestens eines von einer Kamera, einem Radar, einem LiDAR, einer Trägheitsmesseinheit (IMU) und einem GNSS-Empfänger zum Empfangen von Standortkoordinaten des Ego-Fahrzeugs von einem globalen Navigationssatellitensystem (GNSS) beinhaltet.

12. System (1) nach Anspruch 10 oder 11, wobei die Ausgabeeinheit (15) eine Head-up-Anzeige umfasst.

13. System (1) nach mindestens einem der Ansprüche 10 bis 12, ferner umfassend eine Empfangseinheit (16) zum Empfangen von Informationen über Fahrzeuge in einer Region um das Ego-Fahrzeug von den anderen Fahrzeugen, wobei
die Verarbeitungseinheit zum Bestimmen der Trajektorien basierend auf den empfangenen Informationen konfiguriert ist und/oder
die Anweisungseinheit zum Erzeugen der Anweisungen basierend auf den empfangenen Informationen konfiguriert ist.

14. System (1) nach mindestens einem der Ansprüche 10 bis 13, ferner umfassend einen Server, der dazu konfiguriert ist, mit mindestens einer der Folgenden zu kommunizieren und Daten auszutauschen: der Routing-Einheit (11), der Sensoreinheit (12), der Verarbeitungseinheit (13), der Anweisungseinheit (14) und der Ausgabeeinheit (15).

15. System (1) nach mindestens einem der Ansprüche 10 bis 14, wobei sich die Verarbeitungseinheit (13) an dem Server befindet.

## Revendications

1. Procédé d'exploitation d'un système de navigation pour guider un conducteur d'un véhicule autonome vers une destination souhaitée le long d'un chemin d'itinéraire sélectionné, le procédé comprenant :
l'obtention (S103) d'informations sur des véhicules dans une région autour du véhicule autonome ;
la détermination (S104) de trajectoires des véhicules autour du véhicule autonome sur la base des informations obtenues ;
la comparaison (S105) des trajectoires des véhicules autour du véhicule autonome avec le chemin d'itinéraire sélectionné du véhicule autonome ; et
s'il est déterminé (S106) que l'un des véhicules autour du véhicule autonome :
- conduisait,
- conduit actuellement, ou
- conduira
le long du chemin d'itinéraire sélectionné :
la génération (S107) et la délivrance (S108) d'une instruction au conducteur du véhicule autonome de suivre ledit véhicule,
**caractérisé en ce que** :
l'étape d'obtention d'informations sur des véhicules autour du véhicule autonome comprend la détection d'un clignotant d'au moins un des véhicules autour du véhicule autonome ; et
l'instruction est générée comprenant le clignotant du véhicule à suivre par le véhicule autonome.

2. Procédé selon la revendication 1, dans lequel :
l'étape d'obtention d'informations sur d'autres véhicules comprend : la détection d'au moins l'un d'une position, d'une vitesse, d'un cap et/ou d'une attribution de voie d'au moins l'un des véhicules autour du véhicule autonome en utilisant des données de capteur générées par au moins un capteur ; et
les trajectoires des véhicules autour du véhicule autonome sont déterminées sur la base d'au moins l'un parmi la position, la vitesse, le cap et/ou l'attribution de voie d'au moins un des véhicules autour du véhicule autonome.

3. Procédé selon la revendication 1 ou 2, dans lequel :
l'étape d'obtention d'informations sur des véhicules autour du véhicule autonome comprend la détection d'au moins une couleur et/ou une marque et/ou un type d'au moins un des véhicules autour du véhicule autonome ; et
l'instruction est générée comprenant au moins une parmi la couleur détectée, la marque et le type du véhicule à suivre par le véhicule autonome.

4. Procédé selon au moins l'une des revendications précédentes, dans lequel l'étape d'obtention d'informations sur des véhicules autour du véhicule autonome comprend une étape de réception de données des véhicules vers le véhicule autonome à l'aide d'une interface véhicule à véhicule (V2V).

5. Procédé selon au moins l'une des revendications précédentes, dans lequel l'instruction est délivrée au conducteur à l'aide de signaux acoustiques et/ou de signaux optiques.

6. Procédé selon au moins l'une des revendications précédentes, comprenant en outre une étape de transmission des informations obtenues sur des véhicules autour du véhicule autonome à un serveur, dans lequel
l'étape de détermination de trajectoires des véhicules autour du véhicule autonome est réalisée par le serveur.

7. Procédé selon la revendication 6, comprenant en outre une étape de transmission du chemin d'itinéraire sélectionné au serveur, dans lequel
l'étape de comparaison des trajectoires des véhicules autour du véhicule autonome avec le chemin d'itinéraire sélectionné est réalisée par le serveur.

8. Programme comprenant des instructions qui, lorsqu'elles sont exécutées par un ordinateur, amènent l'ordinateur à exécuter le procédé selon au moins l'une des revendications 1 à 7.

9. Programme selon la revendication 8, dans lequel le programme est stocké sur un support non transitoire lisible par ordinateur accessible par le serveur.

10. Système de navigation (1) pour un véhicule autonome, le système comprenant :
une unité d'itinéraire (11) pour sélectionner un chemin d'itinéraire pour le véhicule autonome vers une destination ;
une unité de capteur (12) pour obtenir des données de capteur concernant des véhicules dans une région autour du véhicule autonome à partir d'une pluralité de capteurs ;
une unité de traitement (13) pour déterminer des trajectoires des véhicules autour du véhicule autonome et pour comparer les trajectoires déterminées avec le chemin d'itinéraire sélectionné ;
une unité d'instruction (14) pour générer des instructions pour suivre le chemin d'itinéraire, dans lequel si la trajectoire d'un véhicule autour du véhicule autonome correspond au chemin d'itinéraire sélectionné, l'unité d'instruction est configurée pour générer une instruction pour suivre ledit véhicule ; et
une unité de sortie (15) pour délivrer les instructions à un conducteur du véhicule autonome pour qu'il suive ledit véhicule,
**caractérisé en ce que**
l'unité de capteur (12) est configurée pour détecter un clignotant d'au moins un des véhicules autour du véhicule autonome ; et
l'unité de sortie (15) est configurée pour générer l'instruction comprenant le clignotant du véhicule à suivre par le véhicule autonome.

11. Système (1) selon la revendication 10, dans lequel la pluralité de capteurs comporte au moins l'un d'une caméra, d'un radar, d'un LiDAR, d'une unité de mesure inertielle (IMU) et d'un récepteur GNSS pour recevoir des coordonnées d'emplacement du véhicule autonome à partir d'un système mondial de navigation par satellite (GNSS).

12. Système (1) selon la revendication 10 ou 11, dans lequel l'unité de sortie (15) comprend un affichage tête haute.

13. Système (1) selon au moins l'une des revendications 10 à 12, comprenant en outre une unité de réception (16) pour recevoir des informations sur des véhicules dans une région autour du véhicule autonome à partir des autres véhicules, dans lequel
l'unité de traitement est configurée pour déterminer les trajectoires à partir des informations reçues et/ou l'unité d'instruction est configurée pour générer les instructions sur la base des informations reçues.

14. Système (1) selon au moins l'une des revendications 10 à 13, comprenant en outre un serveur configuré pour communiquer et échanger des données avec au moins l'un parmi : l'unité d'itinéraire (11), l'unité de capteur (12), l'unité de traitement (13), l'unité d'instruction (14) et l'unité de sortie (15).

15. Système (1) selon au moins l'une des revendications 10 à 14, dans lequel l'unité de traitement (13) est située au niveau du serveur.
